# EUROPÄISCHE PATENTSCHRIFT

(11) **EP 1 216 587 B1**
(45) Veröffentlichungstag und Bekanntmachung des Hinweises auf die Patenterteilung: **21.06.2006**
(21) Anmeldenummer: 99957829.7
(22) Anmeldetag: 15.12.1999
(51) Int. Cl.: H04Q 7/32

(54) **VERFAHREN, UM DIE AUTHENTIZITÄT VON DURCH EINE ZERTIFIZIERUNGSINSTANZ HERAUSGEGEBENEN ELEKTRONISCHEN ZERTIFIKATEN IN EINEM MOBILGERÄT ZU VERIFIZIEREN UND ENTSPRECHENDES IDENTIFIZIERUNGSMODUL**
METHOD FOR VERIFYING IN A MOBILE DEVICE THE AUTHENTICITY OF ELECTRONIC CERTIFICATES ISSUED BY A CERTIFICATION AUTHORITY AND CORRESPONDING IDENTIFICATION MODULE
MÉTHODE POUR VÉRIFIER DANS UN APPAREIL MOBILE L'AUTHENTICITÉ DE CERTIFICATS ÉLECTRONIQUES ÉMIS PAR UNE INSTANCE DE CERTIFICATION, ET MODULE D'IDENTIFICATION CORRESPONDANT

(30) Priorität: 01.10.1999 CH 180399
(43) Veröffentlichungstag der Anmeldung: 26.06.2002
(73) Patentinhaber: Swisscom Mobile AG, 3050 Bern (CH)
(72) Erfinder: BUSCH LAUPER, Karin, CH-3014 Bern (CH); ETIQUE, Pierre-Alain, CH-3032 Hinterkappelen (CH); CANTINI, Renato, CH-1782 Belfaux (CH)
(74) Vertreter: P&TS Patents & Technology Surveys SA
(86) Internationale Anmeldenummer: PCT/CH1999/000605
(87) Internationale Veröffentlichungsnummer: WO 2001/026400

(56) Entgegenhaltungen:
- WO-A-97/40616
- US-A- 5 586 166
- US-A- 5 887 266
- PARK: "On Certificate-Based Security Protocols for Wireless Mobile Communication Systems" IEEE NETWORK: THE MAGAZINE OF COMPUTER COMMUNICATIONS, Bd. 11, Nr. 5, 1. September 1997 (1997-09-01), Seiten 50-55, XP000699941 NEW YORK,U.S.A

## Beschreibung

Die vorliegende Erfindung betrifft ein Verfahren, um elektronische Zertifikate in Mobilgeräten zu verifizieren und ein entsprechendes Identifizierungsmodul.

Es sind schon asymmetrische kryptographische Verfahren bekannt, die benutzt werden können, um Kommunikationspartner in einem Mobilfunknetz, beispielsweise in einem GSM-Netz, zu authentisieren. Solche Verfahren basieren beispielsweise auf dem RSA Algorithmus.

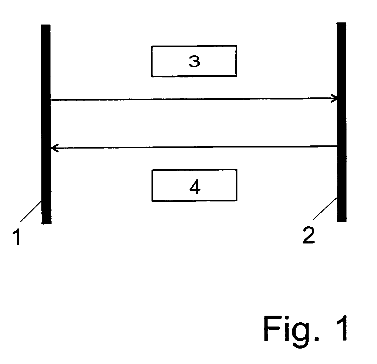

Die Figur 1 zeigt in schematischer Weise einen Authentisierungsvorgang. Wenn die erste Entität 1 eine zweite Entität 2, beispielsweise einen Kommunikationspartner, authentisieren will, muss sie diese zweite Entität bitten, zu beweisen, dass sie einen privaten Schlüssel besitzt. Obwohl der private Schlüssel nur der zweiten Entität bekannt ist, verfügt 1 über den öffentlichen Schlüssel von 2, mit welchem geprüft werden kann, dass 2 den privaten Schlüssel von 2 verwendet hat.

Um diesen Beweis zu erbringen kann beispielsweise die Entität 2 eine Zufallszahl 3 von 1 (Challenge) verschlüsseln, die beiden Parteien bekannt ist. Typischerweise wird die Zufallszahl von 1 erzeugt und nach 2 geschickt; 1 erwartet von 2, dass 2 diese Zufallszahl mit ihrem privaten Schlüssel signiert und dass 2 mit dieser Signatur 4 antwortet. Die Signatur 4 kann dann von 1 mit dem öffentlichen Schlüssel von 2 verifiziert werden.

Das Challenge kann auch implizit beiden Parteien bekannt sein, so dass nur die zweite Meldung 4 geschickt werden muss. Wenn beide Entitäten 1, 2 über eine synchronisierte Uhr verfügen, kann man beispielsweise die Zeit als Challenge verwenden. Wichtig ist vor allem, dass ein Challenge 3 nie zweimal benutzt wird.

Die erste Entität 1 kann auch den öffentlichen Schlüssel von der zweiten Entität 2 verwenden, um Daten zu verschlüsseln, die nur mit dem privaten Schlüssel von 2 entschlüsselt werden können. Auf diese Weise können beispielsweise Session-Keys (oder Datenelemente, die dann erlauben, einen Session-Key abzuleiten) von 1 verschlüsselt werden und an 2 geschickt werden. Wenn 2 später diesen Session Key verwendet, um Daten mit einem symmetrischen Algorithmus zu verschlüsseln, beweist sie auch, dass sie den für die Entschlüsselung dieses Session Keys benötigten privaten Schlüssel tatsächlich besitzt; sie wird damit auch authentifiziert. Der Session Key kann beispielsweise während einer Session verwendet werden.

Selbstverständlich kann auch 2 mit diesem Mechanismus 1 und mit dem Schlüsselpaar von 1 authentifizieren.

Die erste Entität 1 muss sicher sein, dass der öffentliche Schlüssel, den sie benutzt, tatsächlich zur Entität 2 gehört. Um die Echtheit dieses Schlüssels überprüfbar zu machen, kann man Zertifikate benutzen, die von einer Zertifizierungsinstanz (CA - Certification Authority) herausgegeben werden.

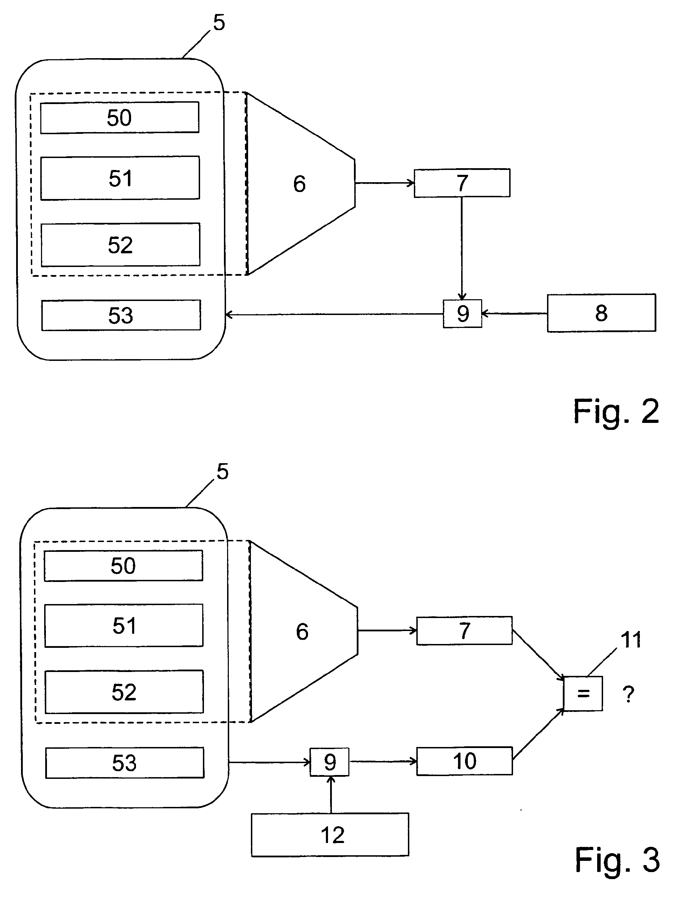

Die Figur 2 zeigt ein Beispiel von einem solchen Schlüsselzertifikat 5. Das Zertifikat 5 ist ein elektronisches Dokument, welches ausser dem öffentlichen Schlüssel 51 des Benutzers üblicherweise auch seinen Name 50 und den Namen der Zertifizierungsinstanz 52 die das Zertifikat herausgegeben hat, umfasst. Mit einer Hashfunktion 6 wird der Hashwert 7 beispielsweise der Parameter 50, 51, 52 ermittelt; dieser Wert 7 wird dann von der Zertifizierungsinstanz anhand eines asymmetrischen kryptographischen Algorithmus 9, beispielsweise RSA, mit dem privaten Schlüssel 8 der Zertifizierungsinstanz signiert und die Signatur 53 wird in das Zertifikat 5 kopiert.

Jede Drittpartei kann dann mit dem öffentlichen Schlüssel 12 der Zertifizierungsinstanz prüfen, ob die digitale Signatur 53 wirklich von der Zertifizierungsinstanz 8 ausgegeben wurde (Figur 3). Zu diesem Zweck muss der Hashwert 7 der Parameter 50 bis 52 ermittelt werden und mit dem Hashwert 10 verglichen werden, welcher aus der Signatur 53 mit dem öffentlichen Schlüssel 12 der Zertifizierungsinstanz ermittelt wird. Sind die beide Hashwerte gleich und vertraut man der Zertifizierungsinstanz, kann das Zertifikat 5 als echt betrachtet werden. Eine Drittpartei, die über den öffentlichen Schlüssel 12 der Zertifizierungsinstanz verfügt, kann auf diese Weise prüfen, ob der im Zertifikat 5 angegebene öffentliche Schlüssel 51 tatsächlich dem identifizierten Partner gehört.

So kommt man aber zurück zum ursprünglichen Problem: wie kann man sicher sein, dass der öffentliche Schlüssel 12 den man hat tatsächlich der Zertifizierungsinstanz gehört und nicht verfälscht wurde? Zu diesem Zweck wird mindestens ein öffentlicher Schlüssel benötigt, dem man trauen kann und der zur Überprüfung aller anderen Zertifikate verwendet werden kann.

Ein solcher "Ursprungsschlüssel" kann beispielsweise in einem selbst signierten "Ursprungszertifikat" abgelegt werden. Der öffentliche Schlüssel, der im Ursprungszertifikat angegeben ist, kann verwendet werden, um dieses Ursprungszertifikat zu überprüfen.

Ein Ziel dieser Erfindung ist es, ein neues Verfahren vorzuschlagen, um solche "Ursprungszertifikate" an Benutzer von Mobilgeräten, insbesondere von Mobilfunktelefonen, zu verteilen.

In der Computerbranche ist es schon bekannt, eine Liste von Ursprungszertifikaten verschiedener Zertifizierungsinstanzen in kommerziellen Browsern abzulegen. Ein Computerbenutzer der einen Browser in seinen Rechner installiert, kopiert damit automatisch diese Liste von Zertifikaten. Wurde jedoch der Browser aus einer nicht vertrauenswürdigen Quelle kopiert, beispielsweise über das Internet, kann nicht ausgeschlossen werden, dass diese Liste verfälscht wurde. Ausserdem können neue Ursprungszertifikate nach der Installation des Browsers nur mit viel Aufwand addiert werden.

Will eine Zertifizierungsinstanz durch dieses Verteilungsverfahren ihre Zertifikate schnell und breit bekannt machen, muss sie mit jedem Browserhersteller verhandeln, damit die Zertifikate in die neuen Versionen jedes Browsers kopiert werden. Es kann aber Monate oder gar Jahre dauern, bevor eine breite Basis von Benutzern eine Browserversion installiert haben.

Es wurde auch suggeriert, Ursprungszertifikate im Mobilgerät selbst abzulegen. Für eine Zertifizierungsinstanz ist es jedoch noch schwieriger, ein Zertifikat schnell in viele Mobilgeräte verschiedener Hersteller zu verteilen.

Elektronische Zertifikate wurden ausserdem in Speicherbereiche von SIM-Karten kopiert. Dadurch entsteht für eine Zertifizierungsinstanz eine Abhängigkeit gegenüber den SIM-Karten Herausgeber. Ausserdem sind Mobilteilnehmer nicht gerne bereit, ihre persönliche SIM-Karte, in welcher auch persönliche Daten wie Telefonnummerverzeichnisse gespeichert sind, zu ersetzen, nur um ihre Liste von Zertifikaten zu aktualisieren.

US-A-5 887 266 offenbart ein Multiple-Slot Mobilfunkgerät mit einer SIM-Karte im ersten Slot und mindestens einer weiteren Chipkarte in einem anderen Slot. Diese mindestens eine weitere Chip-Karte enthält eine eigene CPU, ein EEPROM und ein RAM zur Ausführung von Anwendungen. Handelt es sich bei der Chips-Karte um eine Geldkarte, so kann sich der Benutzer durch Eingabe einer Identifizierungsnummer, die durch die Geldkarte mit einer gespeicherten Nummer verglichen wird, bei einer Anwendung zur Bezahlung per Mobilfunkgerät authentifizieren. Dabei erfolgt die Identifizierung des Electronic Point of Sale, zu dem eine lokale Verbindung beispielsweise über IrDA aufgebaut wird, durch allgemein bekannte Mechanismen der Datenverbindungsschicht (OSI - data link layer), was beispielsweise die Übermittelung eines Zertifikats an das Mobilfunkgerät enthält.

Der Artikle "On Certificate-based security Protocols for wireless mobile Communication Systems", IEEE Network, The Magazin Of Computer Communications, Bd. 11, Nr. 5, 1. September 1997, offenbart unter anderem ein Verfahren zur Autentisierung eines vom Netz erhaltenen Zertifikats anhand eines Zertifikats einer Zertifizierungsinstanz im SIM-Modul eines Mobilfunkgeräts, um mit Hilfe eines Zertifikats die Autentifizierung der korrespondierenden Einheit auf Netzseite sicherzustellen.

WO97/40616 offenbart eine Prepaid-Smart-Karte, welche in einen Mobiltelefon benutzt wird, ein Verfahren zur Vorrausbezahlung von Mobiltelefongesprächen und ein System, um das Mobiltelefon mit einer Prepaid-Smart-Karte zu betreiben. Dabei erlaubt die Karte, das Verfahren und das System Mobiltelefone anonym zu betreiben und/oder die Bezahlung durch einen Nutzer ohne Vertrag. Das System benötigt minimale Anpassungen von bestehenden Mobiltelefonen oder Mobiltelefonnetzwerken und bietet Sicherheit gegenüber einem eventuellen Missbrauch.

Ein Ziel der Erfindung ist es, ein neues Verteilungssystem anzubieten, das eine schnelle Verteilung von Zertifikaten erlaubt.

Ein anderes Ziel ist es, ein neues Verfahren anzubieten, um von einer Zertifizierungsinstanz herausgegebene elektronische Zertifikate in einem Mobilgerät zu verifizieren.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Im beanspruchten Verfahren wird ein selbst signierten elektronisches Zertifikat der Zertifizierungsinstanz oder eine Datei, mit welcher dieses Zertifikat gefunden werden kann, zur Authentifizierung des elektronischen Zertifikats der Zentifizierungsinstanz in einem zweiten Modul des Mobilgeräts gespeichert.

Das zweite Modul kann beispielsweise aus einer zweiten Chipkarte bestehen, die neben der ersten Chipkarte in einem zweiten Karten-Slot eines "Dual-Slots" Mobilgeräts eingeschoben werden kann.

Dies hat den Vorteil, dass elektronische Zertifikate schnell und einfach verteilt werden können, indem neue Module angeboten werden. Mobilteilnehmer, die ein solches neues Zertifikat brauchen, beispielsweise um eine neue gesicherte Anwendung zu benutzen oder um mit einem neuen Partner zu kommunizieren, können es auf sehr einfache Weise installieren, indem sie nur ein neues Modul in ihr Mobilgerät einschieben.

Im Folgenden werden anhand der beigefügten Zeichnung bevorzugte Ausführungsbeispiele der Erfindung näher beschrieben:

Die oben beschriebene Figur 1 zeigt ein Authentisierungsschema basierend auf asymmetrischer Kryptographie.

Die oben beschriebene Figur 2 zeigt in schematischer Weise die Herstellung eines Schlüsselzertifikats.

Die oben beschriebene Figur 3 zeigt in schematischer Weise die Überprüfung eines Zertifikats.

Die Figur 4 zeigt ein "Dual-Slot" Mobilgerät.

Die Figur 5 zeigt das gleiche "Dual-Slot" Mobilgerät in schematischer Weise.

Die Figuren 6 bis 13 zeigen in schematischer Weise den Kommunikationsfluss zwischen dem Mobilgerät und den zwei Modulen in acht verschiedenen Ausführungsformen der Erfindung.

Obwohl diese Erfindung in mehreren Details den speziellen Fall der Ausführung in einem GSM-Mobilfunknetz beschreibt, wird der Fachmann verstehen, dass dieses Verfahren auch mit anderen Typen von Funknetzen, beispielsweise mit AMPS, TDMA, CDMA, TACS, PDC, HSCSD, GPRS, EDGE oder UMTS-Mobilfunknetzen eingesetzt werden kann, insbesondere mit WAP- (Wireless Application Protocol) fähigen Mobilfunknetzen. Diese Erfindung kann ausserdem in anderen Netzen, insbesondere im Internet, verwendet werden.

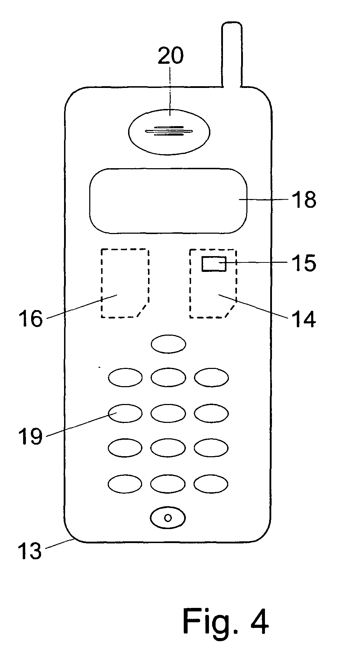

Die Figur 4 zeigt ein Mobilgerät 13, in diesem Beispiel ein Mobilfunktelefon, das für die Erfindung eingesetzt werden kann. Dieses Gerät weist Eingabemittel 19 (hier eine Tastatur), Wiedergabemittel 18 und 20 (hier eine LCD-Anzeige und einen Lautsprecher), ein Slot für ein konventionelles ldentifizierungsmodul, beispielsweise eine SIM-Karte (Subscriber Identification Module), ein SIM-Modul oder eine SIM/WIM-Karte (WAP Identification Module) 16, sowie ein Slot für ein zweites Modul 14, beispielsweise in der Form einer Chipkarte, beispielsweise in Plug-In oder vorzugsweise im ISO-Format. Beide Module 16, 14 können gleichzeitig in das Mobilgerät 13 eingeschoben werden und über eine Schnittstelle mit nicht dargestellten Datenverarbeitungsmitteln im Mobilgerät 13 kommunizieren.

Dual-Slot Mobilfunketelefone 13 sind an sich schon bekannt. Die vorliegende Erfindung kann aber auch mit anderen Typen von Mobilgeräten, die über zwei Modul-Leser verfügen, eingesetzt werden. Beispielsweise könnte diese Erfindung auch mit Rechnern, beispielsweise mit Laptop oder Palmtop, die über zwei Modul-Leser, beispielsweise zwei Chipkartenleser, verfügen, eingesetzt werden.

Das erste Modul 16 ist vorzugsweise als wegnehmbare Chipkarte realisiert, beispielsweise im Plug-In oder im ISO-Format und umfasst einen nicht dargestellten geschützten Speicherbereich, in welchem eine Benutzeridentifizierung abgelegt ist, beispielsweise eine IMSI-Identifizierung (International Mobile Subscriber Identity) in einem GSM-Mobilfunknetz. Ein persönliches Zertifikat des Benutzers kann auch im EEPROM des ersten Moduls 16 enthalten sein. Das erste Modul könnte auch in der Form eines anderen Datenträgers realisiert werden, beispielsweise eines optischen, magnetischen und/oder Halbleiter Datenträgers, beispielsweise als ROM oder EPROM-Modul. Das erste Modul könnte sogar als Software-Modul innerhalb eines geschützten Speicherbereich des Mobilgeräts 13 realisiert werden.

Das erfindungsgemässe zweite Modul 14 ist wegnehmbar und kann unabhängig vom Mobilgerät 13 und vom ersten Modul 16 vermarktet und verteilt werden, beispielsweise direkt durch die Zertifizierungsinstanz, beispielsweise ein Finanzinstitut, ein Telekommunikationsnetzbetreiber, usw.

Vorzugsweise wird das zweite Modul ebenfalls als Chipkarte realisiert, vorzugsweise im handlichen ISO-Format. In weiteren Ausführungsformen könnte dieses Modul jedoch auch in der Form eines anderen Datenträgers realisiert werden, beispielsweise eines optischen, magnetischen und/oder Halbleiter Datenträgers, beispielsweise als ROM oder EPROM-Modul.

Das zweite Modul 14 umfasst einen geschützten Speicherbereich 15, in welchem mindestens ein Zertifikat oder eine Referenz zu einem Zertifikat abgelegt ist, vorzugsweise ein Ursprungszertifikat, mit welchem andere Zertifikate überprüft werden können. Dieses Zertifikat wird vorzugsweise während der Herstellung des zweiten Moduls 14 abgelegt, beispielsweise in einem ROM-Bereich des Moduls 14 definiert. In einer Variante wird dieses Zertifikat bei der Personalisierung des zweiten Moduls durch die Zertifizierungsinstanz 14 abgelegt.

Im Speicherbereich 15 des zweiten Moduls kann beispielsweise ein komplettes Zertifikat 5 der Zertifizierungsinstanz abgelegt werden, wie es auf der Figuren 2 und 3 als Beispiel dargestellt wird. In einer Variante wird stattdessen nur eine Referenz zu einem solchen Zertifikat, beispielsweise ein Hash des Zertifikats, eine Adresse, beispielsweise eine URL-Adresse eines anderswo gespeichertes Zertifikats, die Seriennummer der Zertifizierungsinstanz, usw. In der Folge ist in der Beschreibung und in den Ansprüchen mit "Referenz zum Zertifikat" entweder das Zertifikat selbst gemeint, oder eine andere Datei, die erlaubt, dieses Zertifikat zu finden.

Es können ausserdem Listen von Zertifikaten oder von Ursprungszertifikaten im zweiten Modul 14 enthalten sein.

Das zweite Modul 14 kann auch andere Funktionen als die Prüfung von Zertifikaten erfüllen, beispielsweise Zahlungstransaktionsfunktionen. In einer Variante kann das zweite Modul 14 beispielsweise auch als Geldkarte, beispielsweise als Kredit-, Debit- und /oder Prepaidkarte, eingesetzt werden. Wird das zweite Modul 14 von einem Kreditkarteninstitut oder von einem Finanzinstitut angeboten, kann beispielsweise das Zertifikat oder eine Referenz zum Zertifikat dieses Instituts im Modul abgelegt werden.

Das zweite Modul 14 kann sogar eine multifunktionnelle Chipkarte sein, beispielsweise eine JavaCard (Warenzeichen von Sun) oder eine OpenCard (Warenzeichen von IBM), die erlaubt mehrere Anwendungen als Applet oder als Programm zu unterstützen.

Das im zweiten Modul 14 abgelegte Zertifikat kann vom Mobilgerät 13, beziehungsweise von Anwendungen in diesem Mobilgerät 13 und/oder im ersten Modul 16, verwendet werden, um digitale Signaturen zu prüfen. Beispielsweise kann dieses Zertifikat von Sicherheitsfunktionen des WTLS Protokolls in einem WAP-Browser (Wireless Application Protocol) verwendet werden, um die von einer Zertifizierungsinstanz herausgegebenen Zertifikate von Partnern zu authentifizieren.

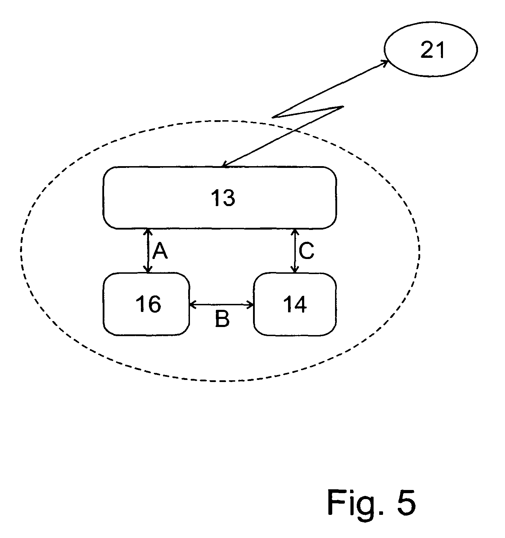

Die Figur 5 zeigt in schematischer Weise die möglichen Datenflüsse A, B, C zwischen dem ersten Modul 16, dem zweiten Modul 14 und dem Mobilgerät 13 (ME - Mobile Equipment), das über ein Mobilfunknetz mit einem entfernten Partner 21, beispielsweise einem Dienstanbieter, kommuniziert. Das Mobilgerät 13, beziehungsweise eine Anwendung in diesem Mobilgerät oder im ersten Modul 16, will den entfernten Partner 21 authentifizieren, zum Beispiel indem das WTLS Protokoll eingesetzt wird. Zu diesem Zweck muss diese Anwendung das Ursprungszertifikat im zweiten Modul 14 benutzen. Dies kann in zwei Modi passieren:

In einer ersten Ausführungsform wird das zweite Modul rein als Speicher benutzt. In dieser Ausführungsform wird das Ursprungszertifikat 5 im benannten Speicherbereich des zweiten Moduls abgelegt und kann vom Mobilgerät 13 und/oder vom ersten Modul 16 abgeholt werden, um das Zertifikat des Partners 21 zu prüfen.

In einer zweiten Variante verfügt das zweite Modul über eigene Datenverarbeitungsmittel (Rechnerleistungen), mit welchen diese Überprüfungen durchgeführt werden können. In dieser Variante gibt das Mobilgerät 13 und/oder das erste Modul 16 das vom Partner 21 empfangene Zertifikat für Überprüfung an das zweite Modul weiter. Das zweite Modul überprüft das Partnerzertifikat und gibt eine Authentisierungsbestätigung, eine nicht-Authentisierungsbestätigung oder vorzugsweise feinere Meldungen als Ergebnis zurück.

Befindet sich der Applikationsausführer, beispielsweise die Anwendung, die ein Zertifikat überprüfen will, im Mobilgerät 13, kann die Kommunikation mit dem zweiten Modul entweder direkt stattfinden (Pfeil C) oder durch das erste Modul 16 (Pfeile A und B) (vorausgesetzt, im Fall von einer Referenz zu einem Zertifikat, dass das Zertifikat abgeholt wird (nicht dargestellte Schritte)).

Vier verschiedene Meldungen können gebraucht werden, um das Zertifikat eines Partners 21 zu überprüfen:
1. Read_CA_Cert_Request: Verlangt eine Kopie des Ursprungszertifikats (oder eine Referenz zu diesem Zertifikat).
2. Read_CA_Cert_Reply: Sendet das Ursprungszertifikat als Antwort (oder eine Referenz zu diesem Zertifikat).
3. Check_Partner_Cert_Request: Sendet das Partnerzertifikat (oder eine Referenz zu diesem Zertifikat).
4. Check_Partner_Cert_Reply: Sendet das Ergebnis der Überprüfung des Zertifikats (Zertifikat authentifiziert / nicht authentifiziert).

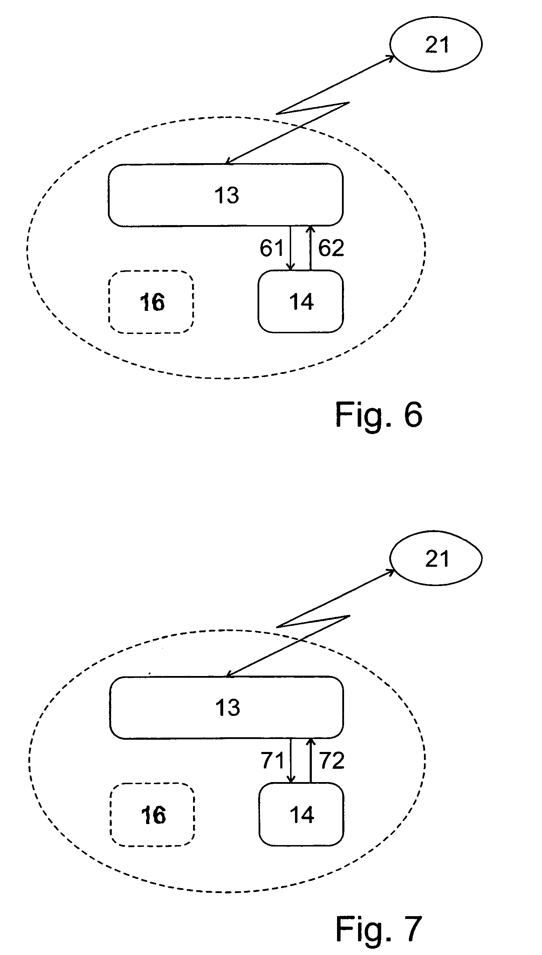

Wir werden jetzt verschiedene Ausführungsformen des erfindungsgemässen Verfahrens anhand der Figuren 6 bis 13 näher beschreiben.

In der mit der Figur 6 dargestellten Variante befindet sich der Applikationsausführer, z.B. eine WTLS-Applikation, im Mobilgerät 13 und die Kommunikation zwischen dem Mobilgerät 13 und dem zweiten Modul 14 findet direkt durch den Kanal C statt. Das zweite Modul 14 wird nur als Speicher benutzt.

In dieser Variante sendet zuerst das Mobilgerät 13 eine Read_CA_Cert_Request (Pfeil 61) an das zweite Modul 14, welches mit dem abgelegten Zertifikat, oder mit der abgelegten Referenz, durch eine Read_CA_Cert_Repty (Pfeil 62) antwortet. Dieses Zertifikat (oder die dazugehörige Referenz) kann dann von einer Anwendung im Mobilgerät verwendet werden, um das Zertifikat eines Partners 21 zu überprüfen.

In der mit der Figur 7 dargestellten Variante befindet sich der Applikationsausführer, z.B. eine WTLS-Applikation, im Mobilgerät 13 und die Kommunikation zwischen dem Mobilgerät 13 und dem zweiten Modul 14 findet direkt durch den Kanal C statt. Im Gegensatz zur Variante der Figur 6 verfügt jedoch das zweite Modul über Datenverarbeitungsmittel, mit welchen es ein Zertifikat selbst überprüfen kann.

In dieser Variante sendet zuerst das Mobilgerät 13 eine Check_Partner_Cert_Request (Pfeil 71) an das zweite Modul 14. Diese Anfrage enthält ein (gegebenenfalls im voraus abgeholtes) Partnerzertifikat. Das zweite Modul antwortet mit dem Ergebnis der durchgeführten Überprüfung durch eine Check_Partner_Cert_Reply (Pfeil 72).

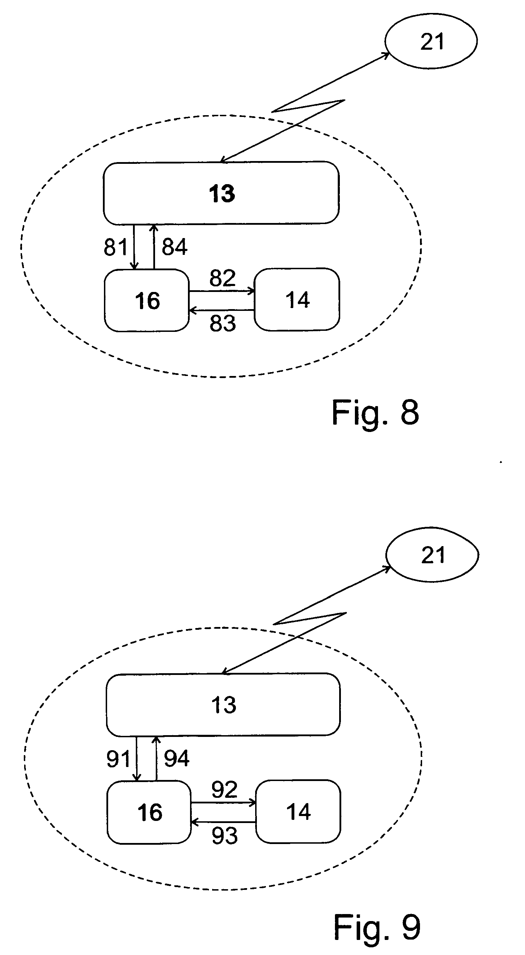

In der mit der Figur 8 dargestellten Variante befindet sich der Applikationsausführer, z.B. eine WTLS-Applikation, im Mobilgerät 13. Die Kommunikation mit dem zweiten Modul 14 findet jedoch durch das erste Modul (SIM oder WIM) 16 statt (Pfeile A und B auf der Figur 5). Das zweite Modul 14 wird nur als Speicher benutzt.

In dieser Variante sendet zuerst das Mobilgerät 13 eine Read_CA_Cert_Request (Pfeil 81) an das erste Modul 16, welches diese Anfrage an das zweite Modul 14 weiterleitet (Pfeil 82). Das zweite Modul 14 antwortet mit dem abgelegten Ursprungszertifikat oder mit der Referenz durch eine Read_CA_Cert_Reply Antwort (Pfeil 83); das erste Modul sendet das erhaltene Zertifikat oder die Referenz weiter an das Mobilgerät 13 (Pfeil 84), welches dieses Ursprungszertifikat verwenden kann, um das Zertifikat des Partners 21 zu überprüfen.

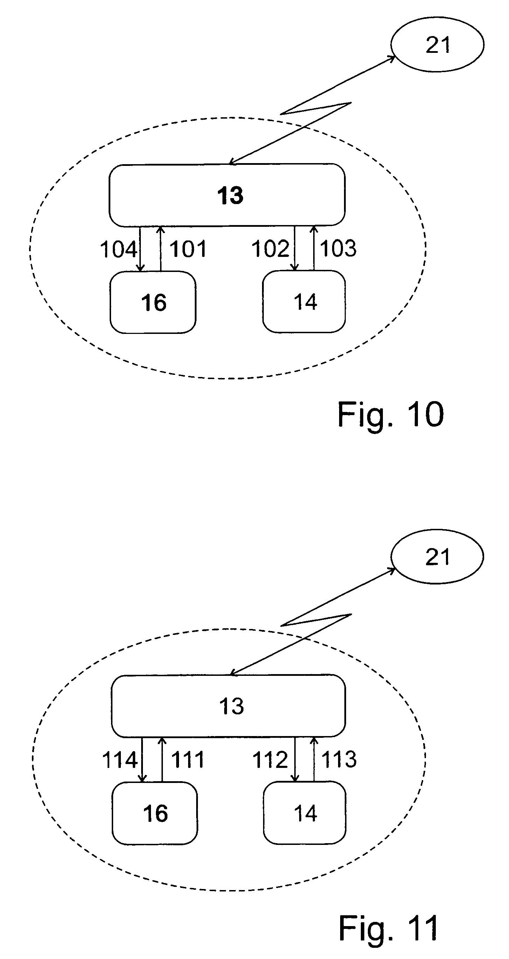

In der mit der Figur 9 dargestellten Variante befindet sich der Applikationsausführer, z.B. eine WTLS-Applikation, im Mobilgerät 13. Die Kommunikation mit dem zweiten Modul 14 findet auch durch das erste Modul (SIM oder WIM) 16 statt. Im Gegensatz zur Variante der Figur 8 verfügt jedoch das zweite Modul über Datenverarbeitungsmittel, mit welchen es ein Zertifikat selbst überprüfen kann.

In dieser Variante sendet zuerst das Mobilgerät 13 eine Check_Partner_Cert_Request (Pfeil 91) an das erste Modul 16. Diese Anfrage enthält das (gegebenenfalls im voraus abgeholtes) Partnerzertifikat, oder eine Referenz zu einem Partnerzertifikat, mit welchem das zweite Modul das Zertifikat über das Endgerät 13 und eventuell über das erste Modul 16 abholen kann. Das erste Modul leitet dann diese Anfrage an das zweite Modul 14 weiter (Pfeil 92). Das zweite Modul 14 überprüft das erhaltene Zertifikat und sendet das Ergebnis der Überprüfung an das erste Modul 16 (Pfeil 93, Check_Partner_Cert_Reply) zurück. Das erste Modul leitet das erhaltene Ergebnis an das Mobilgerät 13 weiter (Pfeil 94).

In der mit der Figur 10 dargestellten Variante befindet sich der Applikationsausführer, z.B. eine WTLS-Applikation, im ersten Modul 16. Die Kommunikation zwischen dem ersten und dem zweiten Modul 14 erfolgt durch das Mobilgerät 13 (Pfeile A und C auf der Figur 5). Das zweite Modul 14 wird nur als Speicher benutzt.

In dieser Variante sendet zuerst das erste Modul 16 eine Read_CA_Cert_Request an das Mobilgerät 13 (Pfeil 101), welches diese Anfrage an das zweite Modul 14 weiterleitet (Pfeil 102). Das zweite Modul antwortet mit dem abgelegten Ursprungszertifikat oder mit einer Referenz zum Ursprungszertifikat durch eine Read_CA_Cert_Reply (Pfeil 103), die an das erste Modul weitergeleitet wird (Pfeil 104). Die Überprüfung des Partnerzertifikats mit dem Ursprungszertifikat erfolgt im ersten Modul 16.

In der mit der Figur 11 dargestellten Variante befindet sich der Applikationsausführer, z.B. eine WTLS-Applikation, im ersten Modul 16. Die Kommunikation zwischen dem ersten und dem zweiten Modul 14 erfolgt durch das Mobilgerät 13 (Pfeile A und C auf der Figur 5). Im Gegensatz zur Variante der Figur 10 verfügt jedoch das zweite Modul 14 über Datenverarbeitungsmittel, mit welchen es ein Zertifikat selbst überprüfen kann.

In dieser Variante sendet zuerst das erste Modul 16 eine Check_Partner_Cert_Request an das Mobilgerät 13 (Pfeil 111). Diese Anfrage enthält ein (gegebenenfalls im voraus abgeholtes) Partnerzertifikat. Das Mobilgerät leitet diese Anfrage an das zweite Modul 14 weiter (Pfeil 112). Das zweite Modul überprüft das erhaltene Partnerzertifikat und sendet durch eine Check_Partner_Cert_Reply (Pfeil 113) das Ergebnis zurück. Dieses Ergebnis wird vom Mobilgerät an das erste Modul weitergeleitet (Pfeil 114).

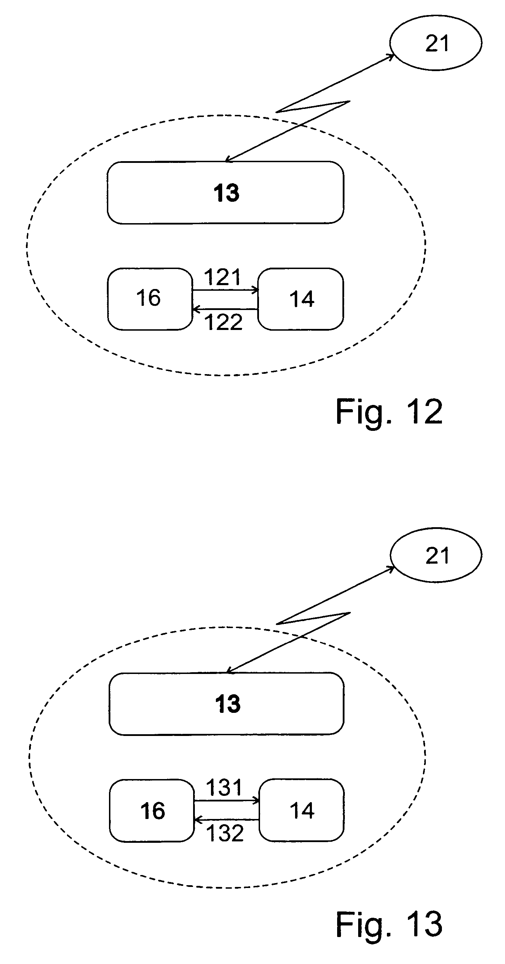

In der mit der Figur 12 dargestellten Variante befindet sich der Applikationsausführer, z.B. eine WTLS-Applikation, im ersten Modul 16. Die Kommunikation zwischen dem ersten und dem zweiten Modul 14 kann direkt stattfinden (Pfeil B auf der Figur 5). Das zweite Modul 14 wird nur als Speicher benutzt.

In dieser Variante sendet zuerst das erste Modul 16 eine Read_CA_Cert_Request (Pfeil 121) an das zweite Modul 14, welches mit dem abgelegten Zertifikat oder mit der Referenz durch eine Read_CA_Cert_Reply (Pfeil 122) antwortet.

In der mit der Figur 13 dargestellten Variante befindet sich der Applikationsausführer, z.B. eine WTLS-Applikation, im ersten Modul 16. Die Kommunikation zwischen dem ersten und dem zweiten Modul 14 kann direkt stattfinden (Pfeil B auf der Figur 5). Im Gegensatz zur Variante der Figur 12 verfügt jedoch das zweite Modul über Datenverarbeitungsmittel, mit welchen es ein Zertifikat selbst überprüfen kann.

In dieser Variante sendet zuerst das erste Modul 16 eine Check_Partner_Cert_Request (Pfeil 131) an das zweite Modul 14. Diese Anfrage enthält ein (gegebenenfalls im voraus abgeholtes) Partnerzertifikat, oder eine Referenz zu einem Partnerzertifikat, mit welchem das zweite Modul das Zertifikat über das Endgerät 13 und eventuell über das erste Modul 16 abholen kann. Das zweite Module antwortet mit dem Ergebnis der durchgeführten Überprüfung durch eine Check_Partner_Cert_Reply (Pfeil 132).

Der Fachmann wird verstehen, dass andere Datenflüsse innerhalb der Erfindung möglich sind. Beispielsweise kann das im zweiten Modul 14 abgelegte Ursprungszertifikat auch verwendet werden, um andere Zertifikate im ersten Modul 16 (beispielsweise das Mobilteilnehmerzertifikat), im Mobilgerät 13, und/oder in über eine kontaktlose Schnittstelle im Nahbereich(beispielsweise gemäss Bluetooth, HomeRF und/oder IrdA) mit dem Mobilgerät 13 verbundenen externen Geräten, beispielsweise POS (Point-of-Sales), zu authentizieren.

## Patentansprüche

1. Verfahren, um die Authentizität von durch eine Zertifizierungsinstanz herausgegebenen elektronischen Zertifikaten in einem Mobilgerät (13) zu verifizieren,
wobei das benannte Mobilgerät über ein Identifizierungsmodul (16) wie beispielsweise SIM oder WIM verfügt,
wobei die benannten herausgegebenen Zertifikate mit einem selbst signierten Zertifikat der Zertifizierungsinstanz authentifiziert werden,
**dadurch gekennzeichnet, dass** entweder das selbst signierte elektronische Zertifikat der Zertifizierungsinstanz oder eine Datei, mit welcher dieses Zertifikat gefunden werden kann, in einem zweiten Modul (14) gespeichert wird, welches mit dem benannten Mobilgerät (13) verbunden wird.

2. Verfahren gemäss dem vorhergehenden Anspruch, **dadurch gekennzeichnet, dass** das benannte elektronische Zertifikat der Zertifizierungsinstanz in das benannte Mobilgerät (13) kopiert wird,
und dass die Authentifizierung der benannten herausgegebenen Zertifikate im Mobilgerät (13) erfolgt.

3. Verfahren gemäss dem Anspruch 1, **dadurch gekennzeichnet, dass** das benannte zweite Modul (14) über Datenverarbeitungsmittel verfügt und dass es die Überprüfungen, die für die Authentifizierung eines Zertifikates benötigt werden, selber durchführt.

4. Verfahren gemäss einem der vorhergehenden Ansprüche, in welchem das benannte zweite Modul (14) eine Chipkarte ist.

5. Verfahren gemäss dem vorhergehenden Anspruch, in welchem die benannte Chipkarte (14) in einen anderen Slot des benannten Mobilgeräts (13) als das benanntes Identifizierungsmodul eingeschoben wird, um sie mit dem Mobilgerät zu verbinden.

6. Verfahren gemäss dem vorhergehenden Anspruch, in welchem die benannte Chipkarte (14) ein ISO-Format hat.

7. Verfahren gemäss einem der vorhergehenden Ansprüche, **dadurch gekennzeichnet, dass** eines der benannten authentifizierten Zertifikat von einem Browser im benannten Mobilgerät (13) benutzt wird.

8. Verfahren gemäss einem der vorhergehenden Ansprüche, **dadurch gekennzeichnet, dass** eines der benannten authentifizierten Zertifikat von einer Anwendung im benannten Identifizierungsmodul (16) benutzt wird.

9. Verfahren gemäss einem der vorhergehenden Ansprüche, **dadurch gekennzeichnet, dass** das benannte Zertifikat der Zertifizierungsinstanz in das benannte Identifizierungsmodul kopiert wird,
und dass die Authentifizierung der benannten herausgegebenen Zertifikate im Identifizierungsmodul (16) erfolgt.

10. Verfahren gemäss einem der vorhergehenden Ansprüche, **dadurch gekennzeichnet, dass** das benannte Mobilgerät ein WAP-fähiges Mobilfunktelefon ist.

11. Verfahren gemäss einem der vorhergehenden Ansprüche, in welchem das elektronische Zertifikat der Zertifizierungsinstanz im benannten zweiten Modul gespeichert wird.

12. Verfahren gemäss einem der Ansprüche 1 bis 10, in welchem die benannte Datei, mit welcher dieses Zertifikat gefunden werden kann, einer Adresse des Zertifikats dieser Zertifizierungsinstanz entspricht.

13. Verfahren gemäss dem vorhergehenden Anspruch, in welchem die benannte Adresse eine URL-Adresse ist.

14. System mit einem Dual-Siot Mobilgerät, einem Identifizerungsmodul (16) im ersten Slot und einem zweiten Modul (14) im zweiten Slot, wobei im zweiten Modul (14) entweder das selbst signierte elektronische Zertifikat einer Zertifizierungsinstanz oder eine Datei, mit welcher dieses Zertifikat gefunden werden kann, gespeichert ist und wobei das System so ausgebildet ist, dass ein Zertifikat mit dem benannten selbst signierten elektronischen Zertifikat einer Zertifizierungsinstanz authentifiziert wird.

15. System gemäss dem vorhergehenden Anspruch, in welchem das Zertifikat einer Zertifizierungsinstanz im benannten zweiten Modul (14) gespeichert ist.

16. System gemäss Anspruch 14, in welchem eine Datei, mit welcher dieses Zertifikat gefunden werden kann, im benannten zweiten Modul (14) gespeichert ist.

17. System gemäss Anspruche 14, in welchem die benannte Datei, mit welcher dieses Zertifikat gefunden werden kann, einer Adresse des Zertifikats dieser Zertifizierungsinstanz entspricht.

18. System gemäss dem vorhergehenden Anspruch, in welchem die benannte Adresse eine URL-Adresse ist.

19. System gemäss einem der Ansprüche 14 bis 18, **dadurch gekennzeichnet, dass** das benannte zweite Modul (14) über Datenverarbeitungsmittel zur Authentifizierung eines Partnerzertifikats verfügt.

20. System gemäss einem der Ansprüche 14 bis 19, **dadurch gekennzeichnet, dass** das benannte zweite Modul (14) über Durchführungsmittel für Zahlungstransaktionsfunktionen verfügt.

21. System gemäss dem vorhergehenden Anspruch, **dadurch gekennzeichnet, dass** das benannte zweite Modul (14) als Geldkarte ausgelegt ist.

22. System gemäss einem der Ansprüche 14 bis 21, wobei das benannte zweite Modul in der Form einer Chipkarte ist.

## Claims

1. Method for verifying in a mobile device (13) the authenticity of electronic certificates issued by a certification authority,
said mobile device having an identification module (16), for example SIM or WIM,
said issued certificates being authenticated with the self signed certificate of the certification authority,
**characterized in that** either the self signed electronic certificate of the certification authority or a data file with which this certificate can be found is stored in a second module (14) that is connected with said mobile device (13).

2. Method according to the preceding claim, **characterized in that** said electronic certificate of the certification authority is copied in said mobile device (13),
and **in that** the authentication of said issued certificate takes place in the mobile device (13).

3. Method according to claim 1, **characterized in that** said second module (14) has data processing means and **in that** it itself performs the verifications required for authenticating a certificate.

4. Method according to one of the preceding claims, wherein said second module (14) is a chip-card.

5. Method according to the preceding claim, wherein said chip-card (14) is inserted into another slot of said mobile device (13) than said identification module, in order to connect it with the mobile device.

6. Method according to the preceding claim, wherein said chip-card (14) has an ISO format.

7. Method according to one of the preceding claims, **characterized in that** one of said authenticated certificate is used by a browser in said mobile device (13).

8. Method according to one of the preceding claims, **characterized in that** one of said authenticated certificate is used by an application in said identification module (16).

9. Method according to one of the preceding claims, **characterized in that** said certificate of the certification authority is copied in said identification module,
and **in that** the authentication of said issued certificate takes place in the identification module (16).

10. Method according to one of the preceding claims, **characterized in that** said mobile device is a WAP-capable mobile radio telephone.

11. Method according to one of the preceding claims, wherein said electronic certificate of the certification authority is stored in said second module.

12. Method according to one of the claims 1 to 10, wherein said data file with which this certificate can be found corresponds to an address of the certificate of this certification authority.

13. Method according to the preceding claim, wherein said address is a URL address.

14. System with a dual-slot mobile device, an identification module (16) in the first slot and a second module (14) in the second slot, whereas either the self-signed electronic certificate of a certification authority or a data file with which this certificate can be found is stored in the second module (14), and whereas the system is designed in such a manner, that a certificate is authenticated with said self signed electronic certificate of a certification authority.

15. System according to the preceding claim, wherein the certificate of a certification authority is stored in said second module (14).

16. System according to claim 14, wherein a data file with which this certificate can be found is stored in said second module (14).

17. System according to claim 14, wherein said data file with which this certificate can be found corresponds to the address of the certificate of this certification authority.

18. System according to the preceding claim, wherein said address is a URL address.

19. System according to one of the claims 14 to 18, **characterized in that** said second module (14) has data processing means for authenticating a partner certificate.

20. System according to one of the claims 14 to 19, **characterized in that** said second module (14) has execution means for payment transaction functions.

21. System according to the preceding claim, **characterized in that** said second module (14) is in the form of a money card.

22. System according to one of the claims 14 to 21, said second module being in the form of a chip-card.

## Revendications

1. Méthode pour vérifier dans un appareil mobile (13) l'authenticité de certificats électroniques émis par une instance de certification,
l'appareil mobile possédant un module d'identification (16) par exemple SIM ou WIM,
lesdits certificats émis étant authentifiés avec un certificat auto-signé de l'instance de certification,
**caractérisée en ce que** soit le certificat électronique auto-signé de l'instance de certification ou un fichier de données permettant de trouver ce certificat est stocké dans un deuxième module (14) qui est connecté au premier appareil mobile (13).

2. Méthode selon la revendication précédente, **caractérisée en ce que** ledit certificat électronique de l'instance de certification est copié dans ledit appareil mobile (13),
et **en ce que** l'authentification desdits certificats émis s'effectue dans l'appareil mobile (13).

3. Méthode selon la revendication 1, **caractérisée en ce que** ledit deuxième module (14) possède des moyens de traitement de données et qu'il effectue lui-même les vérifications nécessaires à l'authentification d'un certificat.

4. Méthode selon l'une des revendications précédentes, dans laquelle ledit deuxième module (14) est une carte à puce.

5. Méthode selon la revendication précédente, dans laquelle ladite carte à puce (14) est insérée dans un autre logement (slot) dudit appareil mobile (13) que ledit module d'identification afin de la connecter avec l'appareil mobile.

6. Méthode selon la revendication précédente, dans laquelle ladite carte à puce (14) a un format ISO.

7. Méthode selon l'une des revendications précédentes, **caractérisée en ce que** l'un desdits certificats authentifiés est utilisé par un navigateur (browser) dans ledit appareil mobile (13).

8. Méthode selon l'une des revendications précédentes, **caractérisée en ce que** l'un desdits certificats authentifiés est utilisé par une application dans ledit module d'identification (16).

9. Méthode selon l'une des revendications précédentes, **caractérisée en ce que** ledit certificat de l'instance de certification est copié dans ledit module d'identification,
et **en ce que** l'authentification desdits certificats émis s'effectue dans le module d'identification (16).

10. Méthode selon l'une des revendications précédentes, **caractérisée en ce que** ledit appareil mobile est un téléphone mobile compatible WAP.

11. Méthode selon l'une des revendications précédentes, dans laquelle le certificat électronique de l'instance de certification est stocké dans ledit deuxième module.

12. Méthode selon l'une des revendications 1 à 10, dans laquelle ledit fichier de données permettant de trouver ce certificat correspond à l'adresse du certificat de cette instance de certification.

13. Méthode selon la revendication précédente, dans laquelle ladite adresse est une adresse URL.

14. Système avec un appareil mobile à deux logements (slots), un module d'identification (16) dans le premier logement et un deuxième module (14) dans le deuxième logement, dans lequel soit le certificat électronique auto-signé d'une instance de certification soit un ficher de données permettant de trouver ce certificat est stocké dans le deuxième module (14), et dans lequel le système est construit de telle sorte qu'un certificat est authentifié avec ledit certificat électronique auto-signé d'une instance de certification.

15. Système selon la revendication précédente, dans lequel le certificat d'une instance de certification est stocké dans ledit deuxième module (14).

16. Système selon la revendication 14, dans lequel un fichier de données permettant de trouver ce certificat est stocké dans ledit deuxième module (14).

17. Système selon la revendication 14, dans lequel ledit fichier de données permettant de trouver ce certificat correspond à l'adresse du certificat de cette instance de certification.

18. Système selon la revendication précédente, dans lequel ladite adresse est une adresse URL.

19. Système selon l'une des revendications 14 à 18, **caractérisé en ce que** ledit deuxième module (14) possède des moyens de traitement de données pour authentifier un certificat partenaire.

20. Système selon l'une des revendications 14 à 19, **caractérisé en ce que** ledit deuxième module (14) possède des moyens d'exécution pour des fonctions de transactions de paiement.

21. Système selon la revendication précédente, **caractérisé en ce que** ledit deuxième module (14) est en la forme d'une carte de paiement.

22. Système selon l'une des revendications 14 à 21, **caractérisé en ce que** ledit deuxième module (14) est en la forme d'une carte à puce.
